# EUROPEAN PATENT APPLICATION

(11) **EP 4 571 621 A1**
(43) Date of publication of application: **18.06.2025**
(21) Application number: 24218803.5
(22) Date of filing: 10.12.2024
(51) Int. Cl.: G06Q 30/00

(54) **GENERATIVE ARTIFICIAL INTELLIGENCE RECOMMENDATION ENGINE IN AN ITEM LISTING SYSTEM**

(30) Priority: 11.12.2023 US 202318535026
(71) Applicant: eBay Inc., San Jose, CA 95125 (US)
(72) Inventor: FUCHS, Gilad Eliyahu, San Jose (US); ESHEL, Yotam, San Jose (US)
(74) Representative: Müller-Boré & Partner Patentanwälte PartG mbB

(57) **Abstract**

Methods, systems, and computer storage media for providing generative artificial intelligence (AI) recommendation management using an artificial intelligence system in an item listing system. A generative AI recommendation engine supports generative AI recommendation management based on a review-based recommendation platform including offline generative AI operations, review-based recommendation guides for items and a review-based recommendation logic. Using generative AI techniques, review-based recommendation guides are generated for a plurality of items. The review-based recommendation logic supports identifying review-based recommended items for users based on review data and the review-based recommendation guides. In operation, review data - associated with a user - for a first item, is accessed. Based on the review data, a review-based recommendation guide feature of the first item is identified. The review-based recommendation guide feature of the first item is mapped to a review-based recommendation guide feature of a second item. The second item is communicated as a review-based recommended item.

## Description

### BACKGROUND

Users can interact with generative artificial intelligence technologies in different types of applications and services to accomplish computing tasks. Generative AI refers to a class of AI systems and algorithms that are designed to generate new data or content that is similar to, or in some cases, entirely different from data they are trained on. Generative AI systems can create support text generation, image generation, music and audio generation, video generation and data synthesis. In particular, generative AI systems can support an item listing system in several ways to improve operational efficiency, customer engagement, and online shopping. For example, an item listing system may employ a generative AI system for content generation (e.g., product descriptions), personalized shopping experiences (e.g., recommendation engines), product discovery (e.g., visual search), and virtual assistants (e.g., chat bots). The item listing system can leverage generative AI through Application Programming Interfaces (APIs), pre-trained models, and custom AI solutions to enhance item listing functionality.

### SUMMARY

Various aspects of the technology described herein are generally directed to systems, methods, and computer storage media for, among other things providing generative AI recommendation management using an artificial intelligence system associated with an item listing system. A generative AI recommendation engine of the artificial intelligence system supports providing generative AI recommendation management in the item listing system. The generative AI recommendation engine supports generating review-based recommendation guides using a generative AI model (e.g., a large language model "LLM"). In particular, the generative AI recommendation engine generates the review-based recommendation guides for users and corresponding items in an item listing database. The review-based recommendation guides are generated based on review data (e.g., reviews, feedback, comments, questions, and answers) and one or more prompts that are executed on the generative AI model. The review-based recommendation guides are computing objects that can be deployed to support different types of recommendation services and interfaces in the item listing system. The generative AI recommendation engine further includes a mapping service - associated with review-based recommendation logic - that maps items that have known user preference information (e.g., user dislikes a feature of an item) in their review-based recommendation guides to other items in an item listing database of the item listing system. The items are identified as review-based recommended items based on review-based recommendation guides of other users with known user preference information.

In operation, review data associated with a user for a first item is accessed. Based on the review data, a review-based recommendation guide feature of the first item is identified. The review-based recommendation guide feature of the first item is mapped to a review-based recommendation guide feature of a second item. The second item is communicated as a review-based recommended item.

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

### BRIEF DESCRIPTION OF THE DRAWINGS

The technology described herein is described in detail below with reference to the attached drawing figures, wherein:
FIGS. 1A and 1B are block diagrams of an artificial intelligence system for providing generative AI recommendation management in an item listing system, in accordance with aspects of the technology described herein;
FIGS. 1C - 1E are schematics and interfaces associated with providing generative AI recommendation management in an item listing system, in accordance with aspects of the technology described herein;
FIG. 2A is a block diagram of an artificial intelligence system for providing generative AI recommendation management in an item listing system, in accordance with aspects of the technology described herein;
FIG. 2B is a block diagram of an artificial intelligence system for providing generative AI recommendation management in an item listing system, in accordance with aspects of the technology described herein;
FIG. 3 provides a first exemplary method of providing generative AI recommendation management in an item listing system, in accordance with aspects of the technology described herein;
FIG. 4 provides a second exemplary method providing generative AI recommendation management in an item listing system, in accordance with aspects of the technology described herein;
FIG. 5 provides a third exemplary method of providing generative AI recommendation management in an item listing system, in accordance with aspects of the technology described herein;
FIG. 6 provides a block diagram of an exemplary item listing system computing environment suitable for use in implementing aspects of the technology described herein;
FIG. 7 provides a block diagram of an exemplary distributed computing environment suitable for use in implementing aspects of the technology described herein; and
FIG. 8 is a block diagram of an exemplary computing environment suitable for use in implementing aspects of the technology described herein.

### DETAILED DESCRIPTION OF THE INVENTION

### Overview

An item listing system and platform support storing items (products or assets) in item databases and providing a search system for receiving queries and identifying search result items based on the queries. An item (e.g., physical item or digital item) refers to a product or asset that is provided for listing on an item listing platform. Search systems support identifying, for received queries, result items from item databases. Item databases can specifically be for content platform or item listing platforms such as EBAY content platform, developed by EBAY INC., of San Jose, California. An item listing system may also provide generative-AI-supported applications ("generative AI applications") that leverage generative AI models (e.g., image generation models and Large Language Models - "LLM") to create, generate, or produce content, data or outputs. LLMs are a specific class of generative AI models that are primarily focused on generating human-like text. Generative AI models, like GPT (Generative-Pre-trained Transformer) and its variants, are designed to generate human-like text or other types of data based on the input they receive (e.g., via a prompt interface). These applications use generative AI to perform various tasks across different domains to provide improvement in automation, efficiency, and human-like interaction.

Conventionally, item listing systems are not configured with a comprehensive logic and infrastructure to effectively provide generative-AI-based recommendations for an item listing system. A conventional item listing systems that fails to integrate user feedback and reviews - for informing recommendations for future items - faces several limitations that compromise the quality and relevance of its suggested items. The absence of user feedback hinders the system's ability to deliver personalized recommendations, leading to generic suggestions that may not align with individual tastes and preferences. Without the rich insights provided by user reviews, the system lacks a nuanced understanding of customer preferences, making it challenging to tailor recommendations to specific needs. Additionally, the system misses out on capturing emerging trends, valuable information about new features, and evolving customer expectations that are often conveyed through user feedback.

Merely implementing a conventional knowledge graph - without a generative AI recommendation engine - causes deficient functioning of an item listing system. For example, reliance on popularity metrics alone, without the contextual understanding from user reviews, may result in recommendations that are driven by sales volume or views, potentially overlooking niche products and reducing the overall discoverability of products. In particular, absence of user feedback impacts the trust and credibility of the system, as users may miss out on valuable insights from real customer experiences and testimonials. The system's inability to leverage user reviews also limits its potential for cross-selling opportunities, as patterns of complementary products frequently purchased together may go unnoticed. Overall, the integration of user feedback and reviews is crucial for adapting to diverse user preferences, staying informed about market trends, and building a more trustworthy and effective recommendation system in the e-commerce domain.

Conventional item listing systems can be improved by addressing these limitations based on leveraging advanced machine learning models and techniques - that can enhance the personalization, trust, and overall quality of recommendations. As such, a more comprehensive item listing system - with an alternative basis for performing generative AI recommendation engine operations - can improve computing operations and interfaces for providing item listing recommendation services in an item listing system.

Embodiments of the present invention are directed to systems, methods, and computer storage media for, among other things, providing generative AI recommendation management using an artificial intelligence system associated with an item listing system. A generative A1 recommendation engine of the artificial intelligence system supports providing generative AI recommendation management in the item listing system. The generative AI recommendation engine supports generating review-based recommendation guides using a generative AI model (e.g., a large language model "LLM"). In particular, the generative AI recommendation engine generates the review-based recommendation guides for users and corresponding items in an item listing database. The review-based recommendation guides are generated based on review data (e.g., reviews, feedback, comments, questions, and answers) and one or more prompts that are executed on the generative AI model. The review-based recommendation guides are computing objects that can be deployed to support different types of recommendation services and interfaces in the item listing system.

The generative AI recommendation engine further includes a mapping service - associated with review-based recommendation logic - that maps items that have known user preference information (e.g., user dislikes a feature of an item) in their review-based recommendation guides to other items in an item listing database of the item listing system that are identified as review-based recommended items.

Generative AI recommendation is provided using the generative AI recommendation engine that is operationally integrated into the item listing system associated with an artificial intelligence system. The artificial intelligence system supports a generative AI recommendation framework of computing components associated with generative AI recommendation engine operations for providing generative AI recommendation management.

At a high level, users can provide informative information or content (e.g., review data) about their preferences regarding various items (e.g., products) in an item listing system. Users can share the specific issues they have experienced with a product in review data associated with the product. The issues can signal attributes (e.g., item features) that users care about for different types of products. For example, User A can be disappointed with the battery life of earbuds or may indicate that a charger gets too hot. Existing recommendation systems in an item listing system may not focus on review data because of historical complexity associated with processing and analyzing the review data; however, with generative AI models (e.g., LLMs) extracting valuable information from review data can be performed to support improving recommendations systems and other types of functionality of an item listing system.

A generative AI review-based recommendation framework is a technical solution directed to providing generative AI recommendation management using a generative AI recommendation engine of an item listing system. The generative AI review-based recommendation framework includes the generative AI recommendation engine that supports generating review-based recommendation guides using a generative AI model (e.g., a large language model - "LLM"). A review-based recommendation guide can refer to a computing object that is generated to support identifying review-based recommendations.

By way of example, LLMs can provide natural language processing (NLP) based on pre-trained models that encode an extensive amount of information. The LLM can be leveraged to understand review data (e.g., reviews, questions, answers, feedback, comments) of an item listing platform to extract user preferences for items or products. A generative AI model can process review data to extract review-based recommendation guide data (e.g., nuanced understanding of customer preferences including emerging trends, new features, and customer expectations). The review-based recommendation guide data can include user preferences for particular product attributes, and further include generative-AI-based review-based insights (e.g., excerpts from the user's review) associated with the user preferences. The review-based recommendation guide data can be used to generate review-based recommendation guides for a user and a corresponding item.

The review-based recommendation guide can be associated with a defined data structure that supports storing different types of user preference data and generative-AI-based review-based insights that support making recommendations based on the user's review data. For example, a review-based recommendation guide can include item features (i.e., review attributes) and an indication whether a user likes a particular feature, does not like a particular feature, or neutral on a particular feature. At a high level, if User A was found to dislike the sound quality of a Speaker X based on User A's review or feedback, and Speaker Y received positive reviews for sound quality from other users, then Speaker Y will be recommended to User A.

By way of further illustration, User A user may draft a review for earbuds. The review can be analyzed using an LLM that identifies a first feature (e.g., battery life for earbuds X) and determines that the user does not like the first feature. User A's user preference information can be stored in a review-based recommendation guide. The review-based recommendation guide feature (i.e., battery life) for User A for the earbuds X can be compared to a corresponding feature of review-based recommendation guides of a plurality of other users for other earbuds. A review-based recommendation logic can be defined to support matching the review-based recommendation guide feature of the first item to review-based recommendation guides features in other review-based recommendation guides. In this way, earbuds Y can be identified based on the plurality of review-based recommendation guides from other users. In particular, earbuds Y can be identified as having good battery life, and earbuds Y is recommended to the user. Earbuds Y can be recommended along with other review attributes from a review-based recommendation guide. For example, a review-based recommendation guide can include one or more excerpts from a corresponding user that indicate that earbuds Y have good battery life.

In operation, an item listing system provides an artificial intelligence system with a generative AI recommendation engine to support providing generative AI recommendation management. The generative AI recommendation engine can employ the generative AI model (e.g., an LLM) to generate review-based recommendation guides. The review-based recommendation guide can refer to a computing object that stores and leverages review data (e.g., user reviews and feedback) to provide recommendations for items in the item listing system. A review-based recommendation guide is generated for user for a corresponding item based on review data that includes the user's preference information for the item. The generative AI recommendation engine can access the review data that is associated with a review interface of the item listing system. The review data is associated with a plurality users for corresponding items associated with the item listing system.

Using the generative AI model and the review data, the generative AI recommendation engine generates review-based recommendation guide data. The review-based recommendation guide data includes user preferences for item features associated with each item. The review-based recommendation guide data can refer to output from the generative AI model that is used to generate review-based recommendation guides for users and corresponding items. For example, a user may review earbuds X, as such, review-based recommendation guide data can be generated using an LLM. The user can be associated with a review-based recommendation guide for the earbuds X. Moreover, if the user indicated a dislike for a battery life of the earbuds X, the LLM would extract the user preference (i.e., dislike for battery life of earbuds X) and the user preference can be stored in the review-based recommendation guide for the battery life feature.

In this way, the review-based recommendation guide data is output from the generative AI model such that the generative AI recommendation engine can use the review-based recommendation guide data to generate a plurality of review-based recommendation guides for users and the corresponding items. The review-based recommendation guides can be associated with a review-based recommendation guide data structure that supports storing review-based recommendation guide features, user preference attributes, and generative AI review-based insights. A review-based recommendation guide can be for a particular item and a user associated with the item. The plurality of review-based recommendation guides are deployed to support identifying review-based recommended items for users.

The generative AI recommendation engine operates to identify review-based recommended items for users. The generative AI recommendation engine can access a review-based recommendation guide for a first user for a first item in the item listing system. Based on the review-based recommendation guide, the generative AI recommendation engine identifies a review-based recommendation guide feature for the first item. The generative AI recommendation engine identifies the review-based recommendation guide feature for the first item using the generative AI model and the review data. The generative AI recommendation engine generates review-based recommendation data that includes user preferences for item features for the item, and generates the review-based recommendation guide for the user.

The generative AI recommendation engine maps the review-based recommendation guide feature of the first item to a review-based recommendation guide feature of a second item. Mapping the review-based recommendation guide feature is based on review-based recommendation logic. The review-based recommendation logic indicates how items should be recommended to users based on user preference attributes and review-based recommendation guide features. Mapping the review-based recommendation guide feature of the first item to a review-based recommendation guide feature of a second item is performed using the review-based recommendation logic that compares the review-based recommendation guide of the first item to a plurality of review-data recommendation guides to match based on the review-based recommendation guide feature.

The review-based recommendation guide feature of the second item is associated with a review-based recommendation guide of one or more second users. The second item is communicated as a review-based recommended item associated with the review data. The second item is associated with a generative AI review-based insight. The generative AI review-based insight can include one or more excerpts of review data corresponding to the one or more second users. In this way, an item listing system client can be used to write a review (e.g., review data) for a first item, and based on writing the review for the first item, a second item can be identified as a review-based recommended item.

Advantageously, the embodiments of the present technical solution support providing generative AI recommendation management using a generative AI recommendation engine in an item listing system. The generative AI recommendation engine supports generating review-based recommendation guides using a generative AI model (e.g., a large language model). The generative AI recommendation engine operations provide a solution to problems (e.g., limited capacity for integrating user feedback and reviews for informing recommendations for future items) in an item listing system. The generative AI recommendation engine components, infrastructure, and ordered combination of steps are an improvement over conventional item listing systems that lack support for a generative AI recommendation engine with review-based recommendation guides.

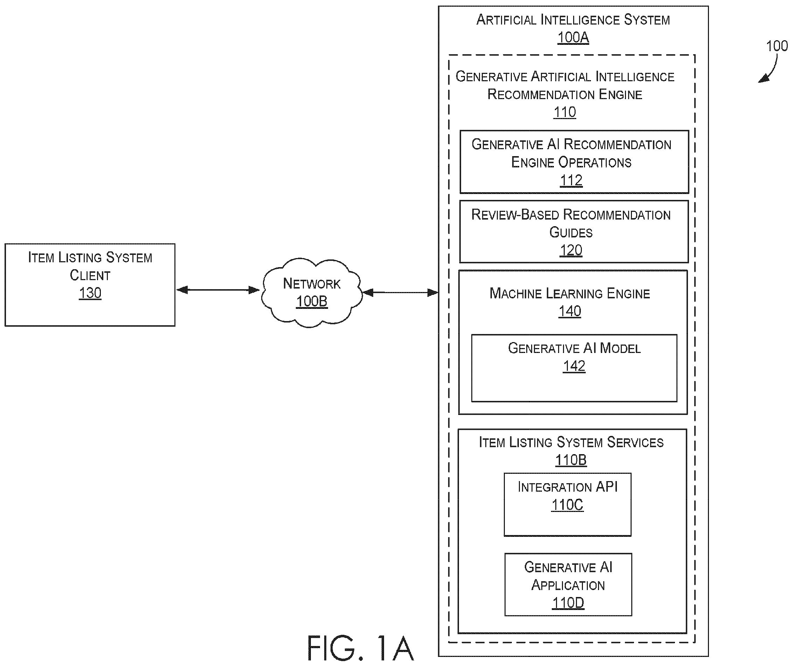

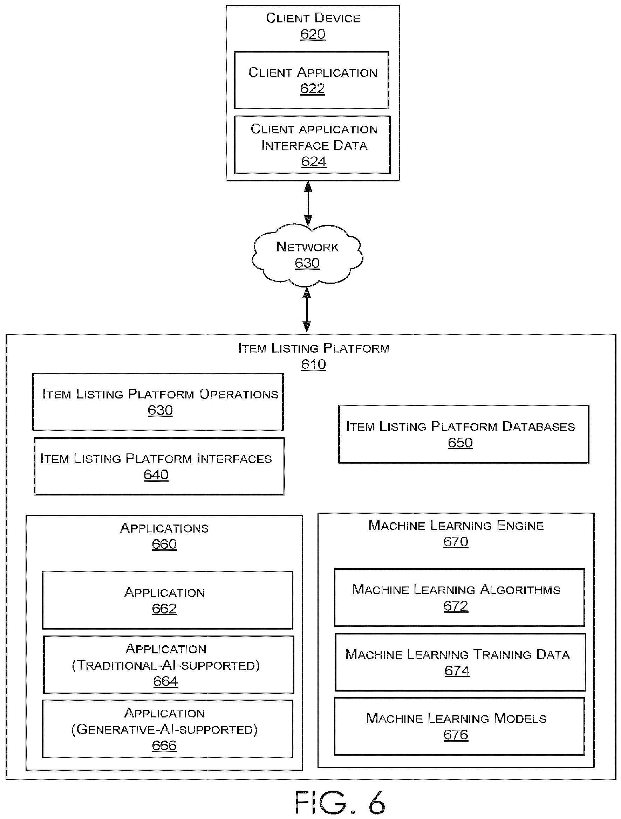

Aspects of the technical solution can be described by way of examples and with reference to FIGS. 1A - 1E. FIG. 1A illustrates an item listing system 100 that includes artificial intelligence system 100A, network 100B, generative artificial intelligence (AI) recommendation engine 110, item listing system services 110B, integration API 110C, generative AI application 110D, generative AI recommendation engine operations 112, review-based recommendation guides 120, item listing system client 130, machine learning engine 140 including generative AI model 142. The item listing system 100 (or product listing system) corresponds to item listing system 600 described below with reference to FIG. 6.

The item listing system 100 provides a system (e.g., artificial intelligence "AI" system 100A) that includes an engine (e.g., generative AI recommendation engine 110) for performing operations (e.g., generative AI recommendation engine operations 112) discussed herein. For example, the generative AI recommendation engine 110 employs the generative AI model 142 to review-based recommendation guides 120 that support identifying review-based recommended items. The generative AI recommendation engine 110 can also operate with the item listing system client 130 (e.g., a client device or generative AI application client) that can access the item listing system 100 to execute tasks using item listing system services 110D (e.g., generative AI application 110D) associated with a corresponding generative AI model 142. For example, a user - via the item listing system client 130 (e.g., a prompt interface) - can communicate a request (e.g., a generative AI request having prompt data) to the generative AI application 110D and the generative AI model 142 - associated with the machine learning engine 140 - to process the request. Based on the communicating the request, the generative Al recommendation engine 110 can execute generative AI recommendation engine operations (e.g. training, generating, deploying, integrating, mapping, predicting, and controlling operations) with components of the generative AI recommendation engine 110 - to ensure processing the request.

The generative AI recommendation engine 110 can further include item listing system services 110B that correspond to different services of the item listing system. The item listing system services can include search services and recommendation services, for example, that employ the review-based recommendation guides 120 to provide item listing system functionality. Item listing system services can include a review-based recommendation service associated with the item listing system 100. Integration Application Programming Interface (API) 110C can be provided to integrate the item listing system services with the review-based recommendation guides 120. Generative AI application 110D may also operate to employ the review-based recommendation guides 120 to provide functionality associated with the generative AI application 110D. Other variations and combinations of item listing system services are contemplated with embodiments described herein.

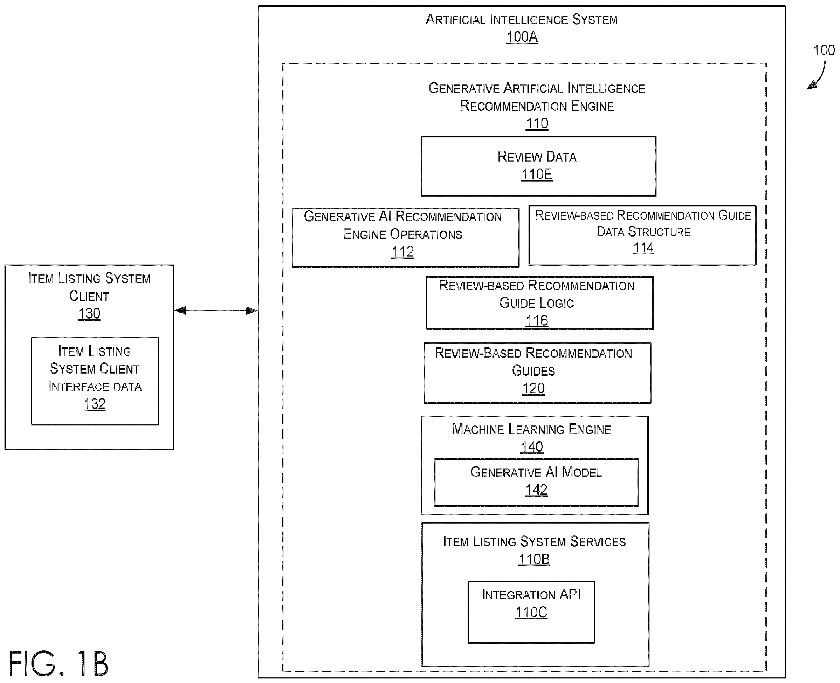

With reference to FIG. 1B, FIG. 1B illustrates item listing system 100, artificial intelligence system 100A, generative AI recommendation engine 110, generative AI application 120, item listing system services 110B, integration API 110C, review data 110E, generative AI recommendation engine operations 112, review-based recommendation guide data structure 114, review-based recommendation guide logic 116, review-based recommendation guides 120, machine learning engine 140 including generative AI model 142, and item listing system client 130 including item listing system client interface data 132.

The generative AI recommendation engine 110 and the item listing system client 130 provide graphical user interfaces (e.g., item listing system interfaces and generative Al application interfaces) and operations (i.e., generative AI recommendation engine operations 112). The generative AI recommendation engine 110 and the item listing system client 130 can operate in a server-client relationship to provide generative AI recommendation management functionality. For example, a user can communicate a request from the item listing system client 130 to execute a task via the generative AI recommendation engine 110 using review-based recommendation guides 120. Based on the request, the generative AI recommendation engine 110 can perform generative AI recommendation engine operations 112 to ensure processing of the request in the artificial intelligence system 100A.

The generative AI recommendation engine 110 may execute generative AI recommendation engine operations 112 to provide functionality associated with generating, deploying, integrating, and using the review-based recommendations guides 120. The generative AI recommendation engine can employ the generative AI model (e.g., an LLM) to generate review-based recommendation guides using review data. Review data can refer to information provided by individuals based on their experiences, opinions, or evaluations of items (e.g., product, service, or experience). Review data can include written comments, ratings, or other forms of expression that convey the sentiments, satisfaction levels, and specific insights of users or customers. Review data can include qualitative and quantitative perspectives on various aspects such as product performance, usability, customer service, and overall user satisfaction. Review data can be collected through different types of interfaces associated with an item listing system.

The review-based recommendation guide can refer to a computing object that stores and leverages review data (e.g., user reviews and feedback) to provide recommendations for items in the item listing system. The review-based recommendation guide can be provided in a data structure that supports storing and employing the review-based recommendation guide. The review-based recommendation guide data structure provides a systematic way for organizing and storing information derived from user review to facilitate the process of generating review-based recommendations. The review-based recommendation guide data structure can include information associated with user opinions, sentiments, and preferences expressed in reviews. The review-based recommendation guide data structure can further include user information, item information, review details, sentiment analysis, feature-specific feedback, comparative information, recommendation likelihood, metadata, user interaction history, custom tags or labels, feature importance scores, trends and patterns, and additional attributes.

Review-based recommendation guide can be based on review-based recommendation guide data that is generated using a generative AI model. For example, generative AI model 142 processed historical review data for an item listing system based on one or more prompts. The generative AI model 142 can be employed to identify different types of review-based recommendation guide data that can be structured and provided in a review-based recommendation guide. The generative AI model 142 can extract user preference data along with additional insights on how to structure and use the review-based recommendation guides. By way of example, the generative AI model may identify or generate sentiment information, user ratings, topics, review summaries, and content analysis associated with review data 110E.

The generative AI model 142 can further be configured to generate generative AI review-based insights for review-based recommendation guides. Generative AI review-based insights can focus on human-like text or images that uncover nuanced patterns in sentiments and preferences. The generative AI model 142 can automatically generate key phrases, unveil semantic similarities, and conduct sentiment analysis to discern the emotional tone of user feedback. The generative A1 model 142 can draft coherent narratives summarizing overall user experiences, identifying recurring themes, and generating custom tags or labels for reviews. In The generative AI models can contribute to trend identification, pinpointing emerging patterns in user feedback, and can provide nuanced insights into contextual product usage.

Additionally, generative AI model 142 facilitates the automatic summarization of reviews, condensing lengthy feedback into informative snippets. The generative AI model 142 can generate feature importance scores, offering a quantitative measure of user priorities, and discerns shifts in sentiment over time or in different contexts. The generative AI review-based insights can be used to structure the output for the review-based recommendation guides or included as part of the review-based recommendation that are identified. A review-based recommendation guide is generated for user for a corresponding item based on review data 110E that includes the user's preference information for the item. The generative AI recommendation engine 110 can access the review data 110E that is associated with a review interface of the item listing system. The review data 110E is associated with a plurality users for corresponding items associated with the item listing system.

The generative AI recommendation engine 110 operates to identify review-based recommended items for users. The generative AI recommendation engine 110 can access a review-based recommendation guide for a first user for a first item. Based on the review-based recommendation guide, the generative AI recommendation engine 110 identifies a review-based recommendation guide feature for the first item. The generative AI recommendation engine 110 identifies the review-based recommendation guide feature for the first item using the generative AI model and the review data. The generative AI recommendation engine 110 generates review-based recommendation data that includes user preferences for item features for the item, and generates the review-based recommendation guide for the user.

The generative AI recommendation engine 110 maps the review-based recommendation guide feature of the first item to a review-based recommendation guide feature of a second item. Mapping the review-based recommendation guide feature is based on review-based recommendation logic 116. The review-based recommendation logic indicates how items should be recommended to users based on user preference attributes and review-based recommendation guide features. Mapping the review-based recommendation guide feature of the first item to a review-based recommendation guide feature of a second item is performed using the review-based recommendation logic that compares the review-based recommendation guide of the first item to a plurality of review-data recommendation guides to match based on the review-based recommendation guide feature.

The review-based recommendation guide logic 116 can include systematic analysis of review-based recommendation guides to make review-based recommendations. The review-based recommendation guide logic 116 can be implemented using machine learning models - including generative AI machine learning models - that employ collaborative filtering algorithms or deep learning models to make review-based recommendations. In particular, based on aggregating user preference information in review-based recommendation guides, the review-based recommendation guide logic 116 can be used to analyze different review-based recommendation guides 120 to make recommendations. By way of illustration, the scenario where a first user expresses discontent with a feature in a first item while a second user expresses satisfaction with the same feature in a second item, various recommendation algorithms can be employed to cater to the first user's preferences.

For example, collaborative filtering techniques, including user-based and item-based approaches, can be utilized to recommend items based on the preferences of users with similar tastes or those who have liked similar items in the past. Content-based filtering takes into account item features and user preferences to provide recommendations, potentially identifying items with characteristics liked by users who favored the second item. Hybrid recommender systems, which combine collaborative and content-based methods, offer a comprehensive approach, leveraging both user-item interactions and item characteristics for more accurate suggestions. Matrix factorization models and deep learning techniques can capture intricate patterns in user behavior and features to enhance personalization. Additionally, the analysis of feature importance, sentiment surrounding the disliked feature, and context-aware recommendation approaches contribute to nuanced and tailored recommendations for the first user.

In this way, a second item can be identified as a review-based recommended item based on a feature of the review-based recommendation guide of the second item. The review-based recommendation guide feature of the second item is associated with a review-based recommendation guide of one or more second users. The second item is communicated as a review-based recommended item associated with the review data. The second item is associated with a generative AI review-based insight. The generative AI review-based insight can include one or more excerpts of review data corresponding to the one or more second users. Other types of generative AI review-based insights are contemplated. As such, an item listing system client can be used to write a review (e.g., review data) for a first item, and based on writing the review for the first item, a second item can be identified as a review-based recommended item.

Item listing system client 130 can be associated with seller interfaces, buyer interfaces, and other item listing system service interfaces associated with the item listing system. The item listing system client 130 can cause display of item listing system client interface data 132 that is associated with items associated with the item listing system 100 based on the generative AI recommendation engine 110, the generative AI model 142, review-based recommendation guides 120, and functionality associated with the item listing system 100. The item listing system client interface data can be associated with different outputs corresponding to the item listing system services 110B and other functional components and outputs of the generative AI recommendation engine 110D.

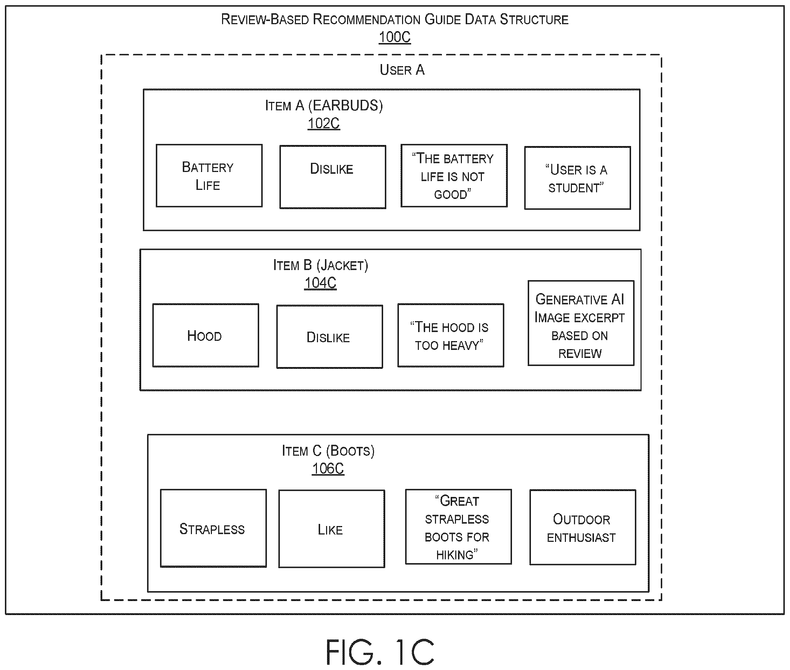

Turning to FIG. 1C, FIG. 1C illustrates a schematic associated with providing generative AI recommendation management using a generative AI recommendation engine in accordance with embodiments described herein. FIG. 1C include a review-based recommendation guide data structure 100C, and an example table representation is shown below.

| Item Features | Description | User Preference Attributes | Except from review data | Additional Generative AI insights |
|---|---|---|---|---|
| Performance | Speed, processing power, and overall performance of the electronic device. | | | |
| Ease of Use | User-friendly interfaces, intuitive controls, and ease of setup. | | | |
| Build Quality | Durability, materials used, and overall construction of the electronic device. | | | |
| Design | Aesthetic appeal, form factor, and overall design of the product. | | | |
| Battery Life | Duration of battery life and performance on a single charge. | | | |
| Connectivity | Availability of ports, wireless connectivity options (e.g., Wi-Fi, Bluetooth), and compatibility with other devices. | | | |
| Storage Capacity | Amount of built-in storage and options for expandable storage. | | | |
| Upgradability | Options for hardware upgrades or software updates. | | | |
| Audio Quality | Sound quality, speaker performance, and support for external audio devices. | | | |
| Heat Management | Ability of the device to manage and dissipate heat during operation. | | | |
| Reliability and Durability | Long-term reliability, resistance to wear and tear, and overall durability. | | | |
| Price-to-Performance Ratio | Value for money in terms of the device's features and performance compared to its cost. | | | |
| Customer Support | Quality of customer support services provided by the manufacturer or brand. | | | |
| Innovative Features | Presence of unique or innovative features that set the product apart. | | | |
| Environmental Impact | Considerations such as energy efficiency, recyclability, and environmental sustainability. | | | |
| Security Features | Built-in security features, such as biometric authentication or encryption. | | | |
| Compatibility with Accessories | Compatibility with accessories and peripherals, such as chargers, cases, or additional hardware. | | | |
| User Interface and Navigation | Usability of the device's interface and ease of navigation through menus and options. | | | |
| Weight and Portability | Weight of the device and its portability for on-the-go use. | | | |

The example tabular representation includes example review-based recommendation data. The review-based recommendation guide data structure is meant to be an exemplary illustration of review-based recommendation guide data structure with review-based recommendation guide data. The review-based recommendation guide data structure 100C can be associated with User A and Item A 102C (carbuds), Item B 104C (jacket) and Item C 106C (boots). Item A 102C, Item B 104C, and Item C 106C can correspond to review data of User A.

The review-based recommendation guide data structure 100C can store review-based recommendation guide features, user preference attributes, and generative AI review-based insights. In particular, the features, user preference attributes, and generative AI review-based insights can be generated from review-based recommendation data that is generated using a generative AI model. The review-based recommendation guide data structure 100C can support communicating review-based recommendation guide data for display on graphical user interfaces associated with item listing system clients.

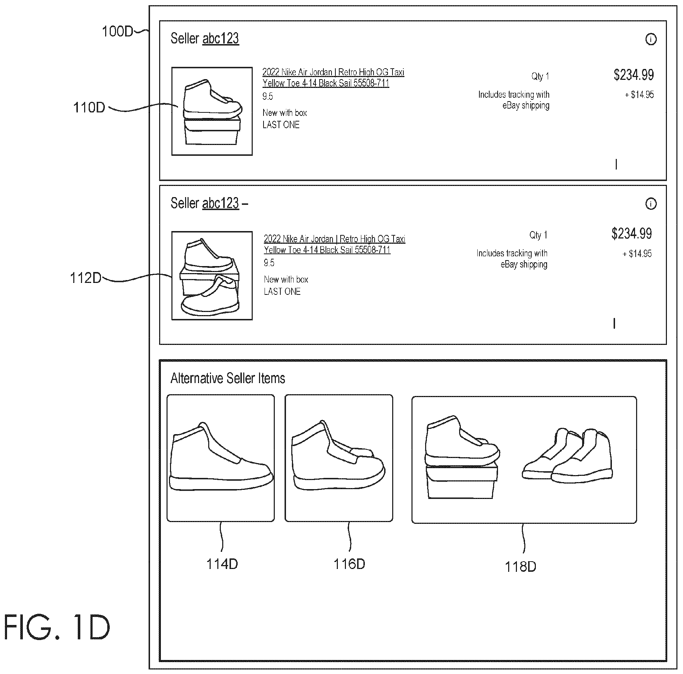

With reference to FIG. 1D, FIG. 1D illustrates a schematic associated with providing a generative AI recommendation engine in accordance with embodiments described herein. FIG. 1D illustrates a seller feedback service interface that provides review-based recommendation items for the seller - to potentially sell in the future - based on review-based recommendation guides associated with items that the seller has previously sold. By way of illustration, Seller abc123 has previously sold Item 110D and Item 112D. Item 110D and Item 112 can be associated with a plurality of review-based recommendation guides that are associated with review data from a corresponding plurality of users. The review-based recommendation guide can be processed using the generative AI recommendation engine and review-based recommendation logic to generate review-based recommended items for the seller (e.g., Item 114D, Item 116D and Item 118D). As such, the review-based recommendation guides for a set of items associated with the seller can be employed to generate review-based recommended items for the seller.

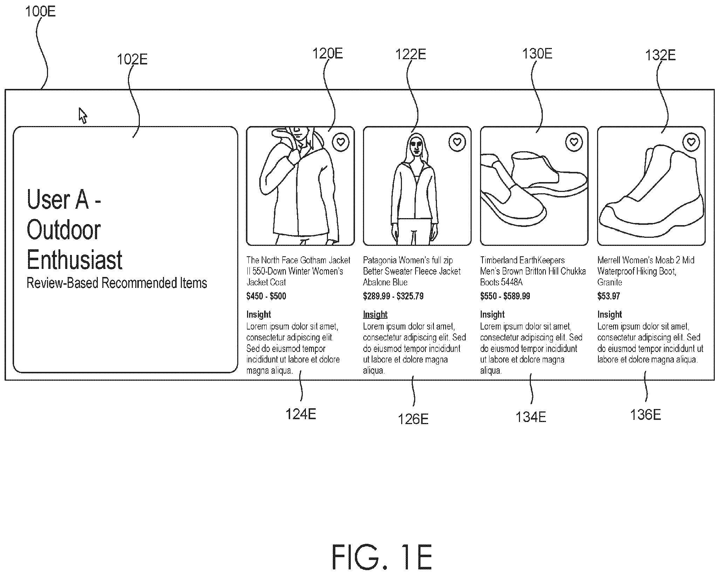

With reference to FIG. 1E, FIG. 1E illustrates a schematic associated with providing review-based recommendation interfaces using a generative AI recommendation engine in an item listing system. The interface can be a review-based recommendation interface 110E for a buyer, where the review-based recommendations are generated using review-based recommendations guides and review-based recommendation management functionality described herein. The review-based recommendation interface 110E can include item 120E, item 122E, item 130E, and item 132E with corresponding generative-AI review-based insight 124E, generative-AI review-based insight 126E, generative-AI review-based insight 134E, and generative-AI review-based insight 136E. The generative-AI review-based insight information can be generated via a generative AI model based review data that is provided in the review-based recommendation guides.

By way of illustration, User A 102E may have bought a first item (e.g., first jacket - not shown) and a second item (e.g., pair of boots - not shown) and review data associated with the first item and second item are processed - using techniques described herein - to generate corresponding review-based recommendation guides. The review-based recommendation guide for the first item can be used to provide review-based recommendations and corresponding insights (i.e., item 120E, item 122E and generative AI review-based insight 124E and generative AI review-based insight 126E) and the review-based recommendation guide for the second item can be used to provide review-based recommendations and corresponding insights (i.e., item 130E, item 132E and generative AI review-based insight 134E and 123E). Other variations and combinations of review-based recommendation interfaces for review-based recommended items and generative AI review-based insights are contemplated with embodiments described herein.

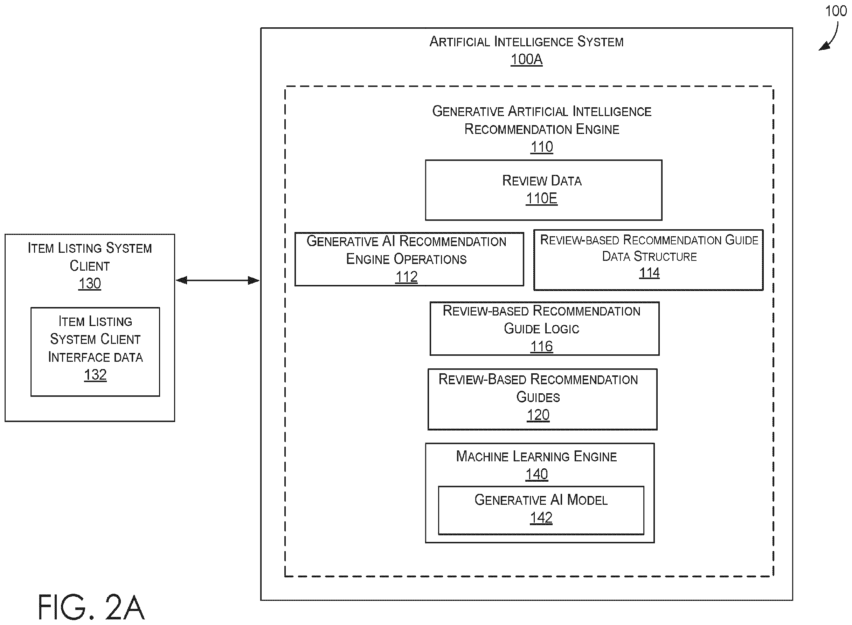

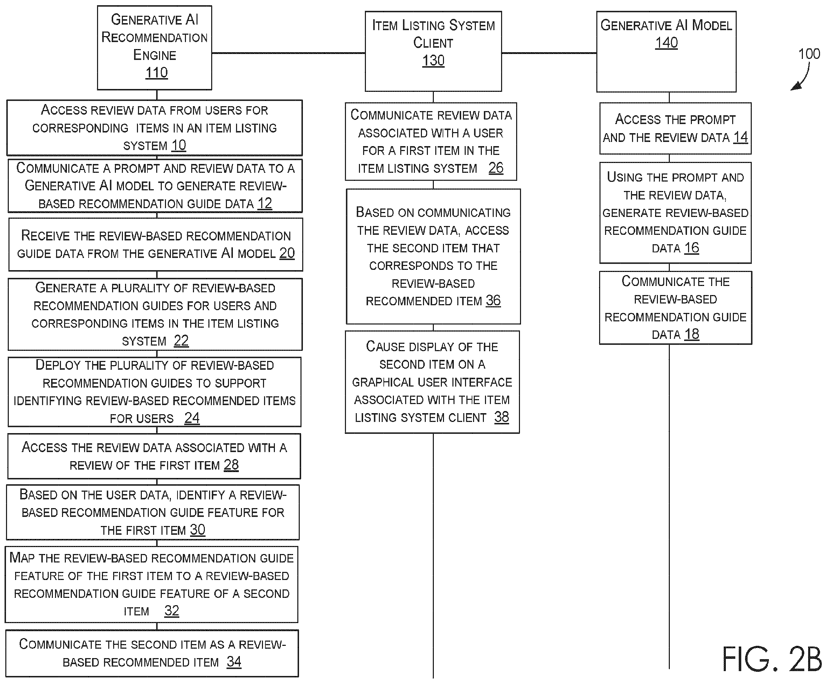

Aspects of the technical solution can be described by way of examples and with reference to FIGS. 2A and 2B. FIG. 2A is a block diagram of an exemplary technical solution environment, based on example environments described with reference to FIGS. 6A, 6B, 7 and 8 for use in implementing embodiments of the technical solution are shown. Generally the technical solution environment includes a technical solution system suitable for providing the example item listing system 100 in which methods of the present disclosure may be employed. In particular, FIG 2A shows a high level architecture of the item listing system 100 in accordance with implementations of the present disclosure. Among other engines, managers, generators, selectors, or components not shown (collectively referred to herein as "components"), the item listing system 100 of FIG. 2A corresponds to FIGS. 1A and 1B.

With reference to FIG. 2A, FIG. 2A illustrates item listing system 100, artificial intelligence system 100A, generative AI recommendation engine 110, review 110D, generative AI recommendation engine operations 112, review-based recommendation guide data structure 114, review-based recommendation guide logic 116, review-based recommendation guides 120, item listing system client 130, item listing system client interface data 132, machine learning engine 140, and generative AI model 142.

The item listing system 100 provides the artificial intelligence system 100A and the generative AI recommendation engine 110 to support providing generative AI recommendation management. The generative AI recommendation engine 110 can execute generative AI recommendation engine operations 112 to employ the generative AI model 142 to generate review-based recommendation guides 120. The generative AI recommendation engine 110 accesses review data 110E. Review data 110E can be associated with a review interface of the item listing system 100. The review interface can support providing near real-time review-based recommended item based on review view data that is received via the review interface. The review data 110E is associated with a plurality users for corresponding items associated with the item listing system 100.

Using the generative AI model 142 and the review data 110E, the generative AI recommendation engine 110 generates review-based recommendation guide data. The review-based recommendation guide data includes user preferences for item features associated with each item. The review-based recommendation guide data is output from the generative AI model 110 that the generative AI recommendation engine 110 uses to generate a plurality of review-based recommendation guides users and the corresponding items. The review-based recommendation guides 120 are associated with a review-based recommendation guide data structure that supports storing review-based recommendation guide features, user preference attributes, and generative AI review-based insights. The plurality of review-based recommendation guides are deployed to support identifying review-based recommended items for users.

The generative AI recommendation engine 110 operates to identify review-based recommended items for users. The generative AI recommendation engine 110 accesses a review-based recommendation guide for a first user for a first item in the item listing system. Based on the review-based recommendation guide, the generative AI recommendation engine 110 identifies a review-based recommendation guide feature for the first item. The generative AI recommendation engine 110 identifies the review-based recommendation guide feature for the first item is based on using the generative AI model 142 and the review data. The generative AI recommendation engine 110 generates review-based recommendation data comprises user preferences for item features for the item, and generates the review-based recommendation guide for the user.

The generative AI recommendation engine 110 maps the review-based recommendation guide feature of the first item to a review-based recommendation guide feature of a second item. Mapping the review-based recommendation guide feature is based on review-based recommendation logic 116. The review-based recommendation logic 116 indicates how items should be recommended to user based on user preference attributes and review-based recommendation guide features. Mapping the review-based recommendation guide feature of the first item to a review-based recommendation guide feature of a second item is performed using the review-based recommendation logic 116 that compares the review-based recommendation guide of the first item to a plurality of review-data recommendation guides to match based on the review-based recommendation guide feature.

The review-based recommendation guide feature of the second item is associated with a review-based recommendation guide of one or more second users. The second item is communicated as a review-based recommended item associated with the review data. The second item is associated with a generative AI review-based insight. The generative AI review-based insight can include one or more excerpts of review data corresponding to the one or more second users.

With reference to FIG. 2B, FIG. 2B illustrates generative AI recommendation engine 110, item listing system client 130, and generative AI model 142 for providing generative AI recommendation management functionality. At block 10, the generative AI recommendation engine 110 accesses review data from users for corresponding items in an item listing system; and at block 12, communicates a prompt and review data to a generative AI model to generate review-based recommendation guide data. At block 14, the generative AI model accesses the prompt and the review data; at block 16, using the prompt and the review data, generates review-based recommendation guide data; and at block 18, communicates the review-based recommendation guide data. At block 20, the generative AI recommendation engine receives the review-based recommendation guide data from the generative AI model; at block 22, generates a plurality of review-based recommendation guides for user and corresponding items in the item listing system; and at block 14, deploys the plurality of review-based recommendation guides to support identifying review-based recommended items for users.

At block 26, the item listing system client 130 communicates review data associated with a user for a first item in the item listing system. At block 28, the generative AI recommendation engine accesses the review data associated with a review of the first item; at block 30, based on the review data, identifies a review-based recommendation guide feature for the first item; at block 32, maps the review-based recommendation guide feature of the first item to a review-based recommendation guide feature of a second item; and at block 34, communicates the second item as a review-based recommended item. At block 36, the item listing system client, based on communicating the review data, accesses the second item that corresponds to the review-based recommended item; at block 38, causes display of the second item on a graphical user interface associated with the item listing system client.

### Example Methods

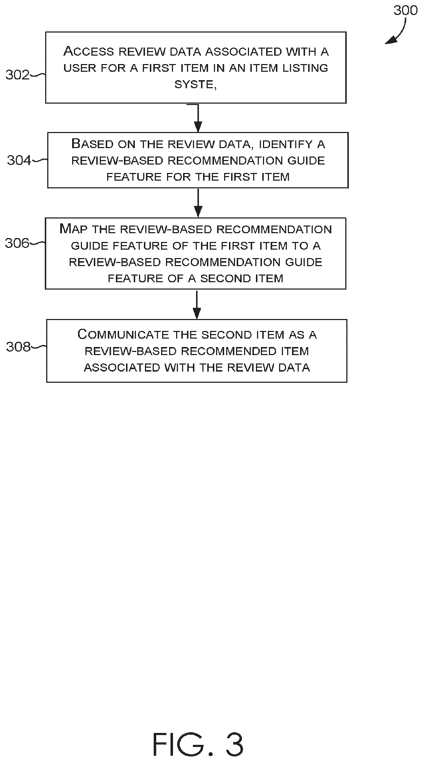

With reference to FIGS. 3, 4, and 5 flow diagrams that illustrate methods providing generative AI recommendation management functionality in an item listing system. The methods may be performed using the item listing system described herein. In embodiments, one or more computer-storage media having computer-executable or computer-useable instructions embodied thereon that, when executed, by one or more processors can cause the one or more processors to perform the methods (e.g., computer implemented method) in an item listing platform system (e.g., computerized system or computer system).

Turning to FIG. 3, a flow diagram is provided that illustrates a method 300 providing generative AI recommendation management functionality in an item listing system. At block 302, a generative AI recommendation engine accesses review data associated a user for a first item. At block 304, the generative AI recommendation engine, based on the review data, identifies a review-based recommendation guide feature for the first item. At block 306, the generative AI recommendation engine maps the review-based recommendation guide feature of the first item to a review-based recommendation guide feature of a second item. At block 308, the generative AI recommendation engine communicates the second item as a review-based recommendation item associated with the review data.

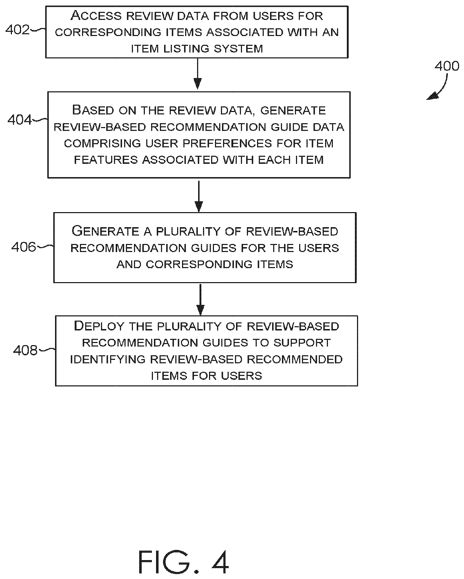

Turning to FIG. 4, a flow diagram is provided that illustrates a method 400 providing generative AI recommendation management functionality in an item listing system. At block 402, a generative AI recommendation engine accesses review data from users for corresponding items associated with an item listing system. At block 404, the generative AI recommendation engine, based on the review data, generates review-based recommendation guide data comprising user preferences for item features associated with each item. At block 406, the generative AI recommendation engine generates a plurality of review-based recommendation guides for the users and corresponding items. At block 408, the generative AI recommendation engine deploys the plurality of review-based recommendation guides to support identifying review-based recommended items for users.

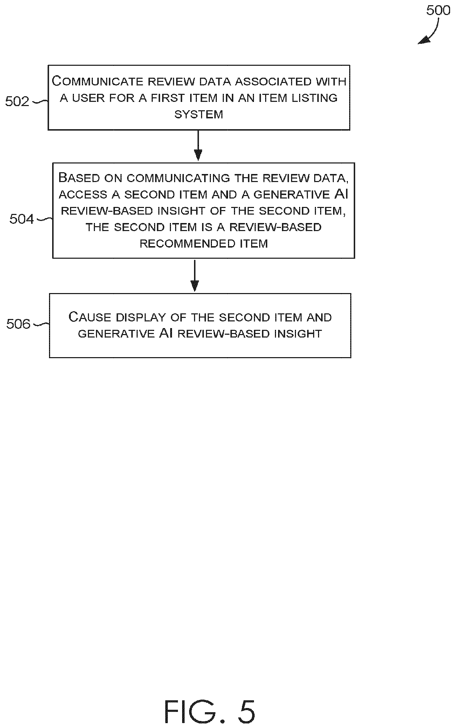

Turning to FIG. 5, a flow diagram is provided that illustrates a method 500 providing generative AI recommendation management functionality in an item listing system. At block 502, an item listing system client communicates review data associated with a user for a first item in an item listing system. At block 504, the item listing system client, based on communicating the review data, accesses a second item and a generative AI review-based insight of the second item. The second item is a review-based recommended item. At block 506, the item listing system causes display of the second item and generative AI review-based insight on a graphical user interface associated with the item listing system.

### Technical Improvement

Embodiments of the present invention have been described with reference to several inventive features (e.g., operations, systems, engines, and components) associated with an item listing platform system. Inventive features described include: operations, interfaces, data structures, and arrangements of computing resources associated with providing the functionality described herein with reference to an artificial intelligence system.

Embodiments of the present invention relate to the field of computing, and more particularly to item listing systems. The following described exemplary embodiments provide a system, method, and program to, among other things, execute generative AI recommendation engine operations that provide functionality associated with generating, deploying, and employing a generative-AI-based reviewed-based recommendation guides. Therefore, the present embodiments improve the technical field of item listing system technology by providing more efficient operations and interfaces. For example, operations and interfaces described for this technical solution provide a specific improvement over prior systems, resulting in an improved functionality for an item listing system. In particular, the review-based recommendation guides and review-based recommendations that are generated using a generative AI model are different from conventional recommendations. The technical solution addresses conventional item listing systems' lack of integration of an artificial intelligence system and a generative AI recommendation engine to improve the item listing system technology by providing improved operations for item listing system services based on employing the review-based recommendation guides for providing the item listing system services.

Functionality of the embodiments of the present invention have further been described, by way of an implementation and anecdotal examples - to demonstrate that the operations for providing generative AI recommendation management functionality in an item listing system are a solution to a specific problem in item listing system technology to improve computing operations and interfaces in item listing systems.

### ADDITIONAL SUPPORT FOR DETAILED DESCRIPTION OF THE INVENTION

### Example Item Listing System Environment

Referring now to FIG. 6, FIG. 6 illustrates an example item listing system 600 computing environment in which implementations of the present disclosure may be employed. In particular, FIG. 6 shows a high level architecture of an example item listing platform 610 that can host a technical solution environment, or a portion thereof. It should be understood that this and other arrangements described herein are set forth as examples. For example, as described above, many elements described herein may be implemented as discrete or distributed components or in conjunction with other components, and in any suitable combination and location. Other arrangements and elements (e.g., machines, interfaces, functions, orders, and groupings of functions) can be used in addition to or instead of those shown.

The item listing system 600 can be a cloud computing environment that provides computing resources for functionality associated with the item listing platform 610. For example, the item listing system 600 supports delivery of computing components and services - including servers, storage, databases, networking, applications, and machine learning associated with the item listing platform 610 and client device 620. A plurality of client devices (e.g., client device 620) include hardware or software that access resources on the item listing system 600. Client device 620 can include an application (e.g., client application 622) and interface data (e.g., client application interface data 624) that support client-side functionality associated with the item listing system. The plurality of client devices can access computing components of the item listing system 600 via a network (e.g., network 630) to perform computing operations.

The item listing platform 610 is responsible for providing a computing environment or architecture that includes the infrastructure that supports providing item listing platform functionality (e.g., e-commerce functionality). The item listing platform support storing item in item databases and providing a search system for receiving queries and identifying search results based on the queries. The item listing platform may also provide a computing environment with features for managing, selling, buying, and recommending different types of items. Item listing platform 610 can specifically be for a content platform such as EBAY content platform or e-commerce platform, developed by EBAY INC., of San Jose, California.

The item listing platform 610 can provide item listing operations 630 and item listing interfaces 640. The item listing operations 630 can include service operations, communication operations, resource management operations, security operations, and fault tolerance operations that support specific tasks or functions in the item listing platform 610. The item listing interfaces 640 can include service interfaces, communication interfaces, resource interfaces, security interfaces, and management and monitoring interfaces that support functionality between the item listing platform components. The item listing operations 630 and item listing interfaces 640 can enable communication, coordination and seamless functioning of the item listing system 600.

By way of example, functionality associated with item listing platform 610 can include shopping operations (e.g., product search and browsing, product selection and shopping cart, checkout and payment, and order tracking); user account operations (e.g., user registration and authentication, and user profiles); seller and product management operations (e.g., seller registration and product listing and inventory management); payment and financial operations (e.g., payment processing, refunds and returns); order fulfillment operations (e.g., order processing and fulfillment and inventory management); customer support and communication interfaces (e.g., customer support chat/email and notifications); security and privacy interfaces (e.g., authentication and authorization, payment security); recommendation and personalization interfaces (e.g., product recommendations and customer reviews and ratings); analytics and report interfaces (e.g., sales and inventory reports, and user behavior analytics); and APIs and Integration Interfaces (e.g., APIs for Third-Party Integration).

The item listing platform 610 can provide item listing platform databases (e.g., item listing platform databases 650) to manage and store different types of data efficiently. The item listing platform databases 650 can include relational databases, NoSQL databases, search databases, cache databases, content management systems, analytics databases, payment gateway database, customer relationship management databases, log and error databases, inventory and supply chain databases, and multi-channel databases that are used in combination to efficiently manage data and provide e-commerce experience for users.

The item listing platform 610 supports applications (e.g., applications 660) that is a computer program or software component or service that serves a specific function or set of functions to fulfil a particular item listing platform requirement or user requirement. Applications can be client-side (user-facing) and server-side (backend). Applications can also include application without any AI support (e.g., application 662) application supported by traditional AI model (e.g., application 664), and applications supported by generative AI models (e.g., application 666). By way of example, applications can include an online storefront application, mobile shopping app, admin and management console, payment gateway integration, user account and authentication application, search and recommendation engines, inventory and stock management application, order processing and fulfillment application, customer support and communication tools, content management system, analytics and report applications, marketing and promotion applications, multi-channel integration applications, log and error tracking applications, customer relationship management (CRM) applications, security applications, and APIs and web services that are used in combination to efficiently deliver e-commerce experiences for users.

The items listing platform 610 can include a machine learning engine (e.g., machine learning engine 670). The machine learning engine 670 refers to machine learning framework or machine learning platform that provides the infrastructure and tools to design, train, evaluate, and deploy machine learning models. The machine learning engine 670 can serve as the backbone for developing and deploying machine learning applications and solutions. Machine learning engine 670 can also provide tools for visualizing data and model results, as well as interpreting model decisions to gain insights into how the model is making predictions.

The machine learning engine 670 can provide the necessary libraries, algorithms, and utilities to perform various tasks within the machine learning workflow. The machine learning workflow can include data processing, model selection, model training, model evaluation, hyperparameter tuning, scalability, model deployment, inference, integration, customization, data visualization. Machine learning engine 670 can include pre-trained models for various tasks, simplifying the development process. In this way, the machine learning engine 670 can streamline the entire machine learning process, from data preparation and model training to deployment and inference, making it accessible and efficient for different types of users (e.g., customers, data scientists, machine learning engineers, and developers) working on a wide range of machine learning applications.

Machine learning engine 670 can be implemented in the item listing system 600 as a component that leverages machine learning algorithms and techniques (e.g., machine learning algorithms 672) to enhance various aspects of the item listing system's functionality. Machine learning engine 670 can provide a selection of machine learning algorithms and techniques used to teach computers to learn from data and make predictions or decisions without being explicitly programmed. These techniques are widely used in various applications across different industries, and can include the following examples: supervised learning (e.g., linear regression: classification, support vector machines (SVM); unsupervised learning (e.g., clustering, principal component analysis (PCA), association rules (e.g., apriori); reinforcement learning (e.g., Q-Learning, deep Q-Network (DQN); and deep learning (e.g., neural networks, convolutional neural networks (CNN), and recurrent neural networks (RNN); and ensemble learning random forest.

Machine learning training data 120 supports the process of building, training, and fine-tuning machine learning models. Machine learning training data 120 consists of a labeled dataset that is used to teach a machine learning model to recognize patterns, make predictions, or perform specific tasks. Training data typically comprises two main components: input feature (X) and labels or target values (Y). Input features can include variables, attributes, or characteristics used as input to the machine learning model. Input features (X) can be numeric, categorical, or even textual, depending on the nature of the problem. For example, in a model for predicting house prices, input features might include the number of bedrooms, square footage, neighborhood, and so on. Labels or target values (Y) include the values that the model aims to predict or classify. Labels represent the desired output or the ground truth for each corresponding set of input features. For instance, in a spam email classifier, the labels would indicate whether each email is spam or not (i.e., binary classification). The training process involves presenting the model with the training data, and the model leams to make predictions or decisions by identifying patterns and relationships between the input features (X) and the target values (Y). A machine learning algorithm adjusts its internal parameters during training in order to minimize the difference between its predictions and the actual labels in the training data. Machine learning engine 670 can use historical and real-time data to train models and make predictions, continually improving performance and user experience.

Machine learning engine 670 can include machine learning models (e.g., machine learning models 676) generated using the machine learning engine workflow. Machine learning models 676 can include generative AI models and traditional AI models that can both be employed in the item listing system 600. Generative AI models are designed to generate new data, often in the form of text, images, or other media, based on patterns and knowledge learned from existing data. Generative AI models can be employed in various ways including: content generation, product image generation, personalized product recommendations, natural language chatbots, and content summarization. Traditional AI models encompass a wide range of algorithms and techniques and can be employed in various ways including: recommendation systems, predictive analytics, search algorithms, fraud detection, customer segmentation, image classification, Natural Language Processing (NLP) and A/B testing and optimization. In many cases, a combination of both generative and traditional AI models can be employed to provide a well-rounded and effective e-commerce experience, combining data-driven insights and creativity.

Machine learning engine 670 can be used to analyze data, make predictions, and automate processes to provide a more personalized and efficient shopping experience for users. By way of example, product recommendations search and filtering: pricing optimization, inventory and stock management: customer segmentation, churn prediction and retention, fraud detection, sentiment analysis, customer support and chatbots, image and video analysis, and ad targeting and marketing. The specific applications of machine learning within the item listing platform 610 can vary depending on the specific goals, available data, and resources.

### Example Distributed Computing System Environment

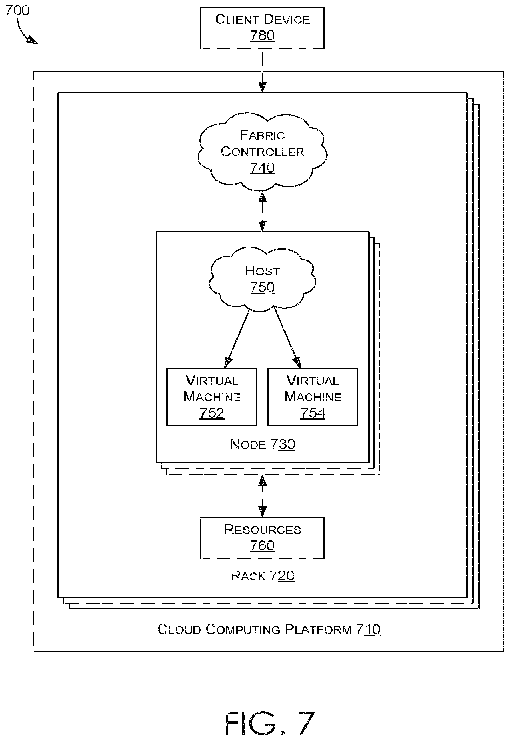

Referring now to FIG. 7, FIG. 7 illustrates an example distributed computing environment 700 in which implementations of the present disclosure may be employed. In particular, FIG. 7 shows a high level architecture of an example cloud computing platform 710 that can host a technical solution environment, or a portion thereof (e.g., a data trustee environment). It should be understood that this and other arrangements described herein are set forth only as examples. For example, as described above, many of the elements described herein may be implemented as discrete or distributed components or in conjunction with other components, and in any suitable combination and location. Other arrangements and elements (e.g., machines, interfaces, functions, orders, and groupings of functions) can be used in addition to or instead of those shown.

Data centers can support distributed computing environment 700 that includes cloud computing platform 710, rack 720, and node 730 (e.g., computing devices, processing units, or blades) in rack 720. The technical solution environment can be implemented with cloud computing platform 710 that runs cloud services across different data centers and geographic regions. Cloud computing platform 710 can implement fabric controller 740 component for provisioning and managing resource allocation, deployment, upgrade, and management of cloud services. Typically, cloud computing platform 710 acts to store data or run service applications in a distributed manner. Cloud computing infrastructure 710 in a data center can be configured to host and support operation of endpoints of a particular service application. Cloud computing infrastructure 710 may be a public cloud, a private cloud, or a dedicated cloud.

Node 730 can be provisioned with host 750 (e.g., operating system or runtime environment) running a defined software stack on node 730. Node 730 can also be configured to perform specialized functionality (e.g., compute nodes or storage nodes) within cloud computing platform 710. Node 730 is allocated to run one or more portions of a service application of a tenant. A tenant can refer to a customer utilizing resources of cloud computing platform 710. Service application components of cloud computing platform 710 that support a particular tenant can be referred to as a multi-tenant infrastructure or tenancy. The terms service application, application, or service are used interchangeably herein and broadly refer to any software, or portions of software, that run on top of, or access storage and compute device locations within, a datacenter.

When more than one separate service application is being supported by nodes 730, nodes 730 may be partitioned into virtual machines (e.g., virtual machine 752 and virtual machine 754). Physical machines can also concurrently run separate service applications. The virtual machines or physical machines can be configured as individualized computing environments that are supported by resources 760 (e.g., hardware resources and software resources) in cloud computing platform 710. It is contemplated that resources can be configured for specific service applications. Further, each service application may be divided into functional portions such that each functional portion is able to run on a separate virtual machine. In cloud computing platform 710, multiple servers may be used to run service applications and perform data storage operations in a cluster. In particular, the servers may perform data operations independently but exposed as a single device referred to as a cluster. Each server in the cluster can be implemented as a node.

Client device 780 may be linked to a service application in cloud computing platform 710. Client device 780 may be any type of computing device, which may correspond to computing device 700 described with reference to FIG. 7, for example, client device 780 can be configured to issue commands to cloud computing platform 710. In embodiments, client device 780 may communicate with service applications through a virtual Internet Protocol (IP) and load balancer or other means that direct communication requests to designated endpoints in cloud computing platform 710. The components of cloud computing platform 710 may communicate with each other over a network (not shown), which may include, without limitation, one or more local area networks (LANs) and/or wide area networks (WANs).

### Example Computing Environment

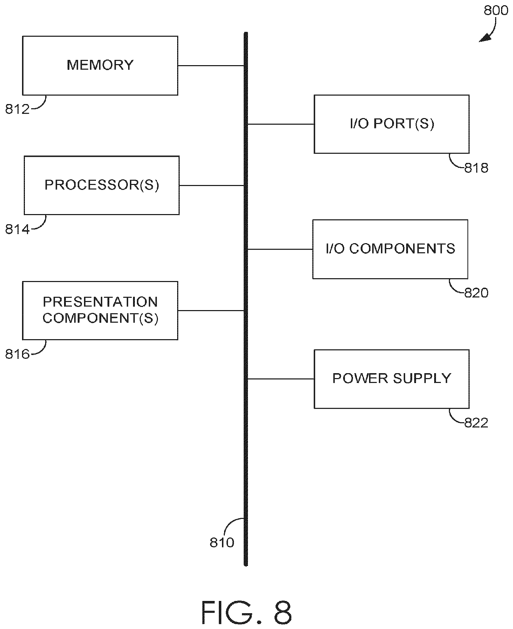

Having briefly described an overview of embodiments of the present invention, an example operating environment in which embodiments of the present invention may be implemented is described below in order to provide a general context for various aspects of the present invention. Referring initially to FIG. 8 in particular, an example operating environment for implementing embodiments of the present invention is shown and designated generally as computing device 800. Computing device 800 is but one example of a suitable computing environment and is not intended to suggest any limitation as to the scope of use or functionality of the invention. Neither should computing device 800 be interpreted as having any dependency or requirement relating to any one or combination of components illustrated.

The invention may be described in the general context of computer code or machine-useable instructions, including computer-executable instructions such as program modules, being executed by a computer or other machine, such as a personal data assistant or other handheld device. Generally, program modules including routines, programs, objects, components, data structures, etc. refer to code that perform particular tasks or implement particular abstract data types. The invention may be practiced in a variety of system configurations, including hand-held devices, consumer electronics, general-purpose computers, more specialty computing devices, etc. The invention may also be practiced in distributed computing environments where tasks are performed by remote-processing devices that are linked through a communications network.

With reference to FIG. 8, computing device 800 includes bus 810 that directly or indirectly couples the following devices: memory 812, one or more processors 814, one or more presentation components 816, input/output ports 818, input/output components 820, and illustrative power supply 822. Bus 810 represents what may be one or more buses (such as an address bus, data bus, or combination thereof). The various blocks of FIG. 8 are shown with lines for the sake of conceptual clarity, and other arrangements of the described components and/or component functionality are also contemplated. For example, one may consider a presentation component such as a display device to be an I/O component. Also, processors have memory. We recognize that such is the nature of the art, and reiterate that the diagram of FIG. 8 is merely illustrative of an example computing device that can be used in connection with one or more embodiments of the present invention. Distinction is not made between such categories as "workstation," "server," "laptop," "hand-held device," etc., as all are contemplated within the scope of FIG. 8 and reference to "computing device."

Computing device 800 typically includes a variety of computer-readable media. Computer-readable media can be any available media that can be accessed by computing device 800 and includes both volatile and nonvolatile media, removable and non-removable media. By way of example, and not limitation, computer-readable media may comprise computer storage media and communication media.

Computer storage media include volatile and nonvolatile, removable and non-removable media implemented in any method or technology for storage of information such as computer-readable instructions, data structures, program modules or other data. Computer storage media includes, but is not limited to, RAM, ROM, EEPROM, flash memory or other memory technology, CD-ROM, digital versatile disks (DVD) or other optical disk storage, magnetic cassettes, magnetic tape, magnetic disk storage or other magnetic storage devices, or any other medium which can be used to store the desired information and which can be accessed by computing device 800. Computer storage media excludes signals per se.

Communication media typically embodies computer-readable instructions, data structures, program modules or other data in a modulated data signal such as a carrier wave or other transport mechanism and includes any information delivery media. The term "modulated data signal" means a signal that has one or more of its characteristics set or changed in such a manner as to encode information in the signal. By way of example, and not limitation, communication media includes wired media such as a wired network or direct-wired connection, and wireless media such as acoustic, RF, infrared and other wireless media. Combinations of any of the above should also be included within the scope of computer-readable media.

Memory 812 includes computer storage media in the form of volatile and/or nonvolatile memory. The memory may be removable, non-removable, or a combination thereof. Exemplary hardware devices include solid-state memory, hard drives, optical-disc drives, etc. Computing device 800 includes one or more processors that read data from various entities such as memory 812 or I/O components 820. Presentation component(s) 816 present data indications to a user or other device. Exemplary presentation components include a display device, speaker, printing component, vibrating component, etc.

I/O ports 818 allow computing device 800 to be logically coupled to other devices including I/O components 820, some of which may be built in. Illustrative components include a microphone, joystick, game pad, satellite dish, scanner, printer, wireless device, etc.

Additional Structural and Functional Features of Embodiments of the Technical Solution

Having identified various components utilized herein, it should be understood that any number of components and arrangements may be employed to achieve the desired functionality within the scope of the present disclosure. For example, the components in the embodiments depicted in the figures are shown with lines for the sake of conceptual clarity. Other arrangements of these and other components may also be implemented. For example, although some components are depicted as single components, many of the elements described herein may be implemented as discrete or distributed components or in conjunction with other components, and in any suitable combination and location. Some elements may be omitted altogether. Moreover, various functions described herein as being performed by one or more entities may be carried out by hardware, firmware, and/or software, as described below. For instance, various functions may be carried out by a processor executing instructions stored in memory. As such, other arrangements and elements (e.g., machines, interfaces, functions, orders, and groupings of functions) can be used in addition to or instead of those shown.

Embodiments described in the paragraphs below may be combined with one or more of the specifically described alternatives. In particular, an embodiment that is claimed may contain a reference, in the alternative, to more than one other embodiment. The embodiment that is claimed may specify a further limitation of the subject matter claimed.

The subject matter of embodiments of the invention is described with specificity herein to meet statutory requirements. However, the description itself is not intended to limit the scope of this patent. Rather, the inventors have contemplated that the claimed subject matter might also be embodied in other ways, to include different steps or combinations of steps similar to the ones described in this document, in conjunction with other present or future technologies. Moreover, although the terms "step" and/or "block" may be used herein to connote different elements of methods employed, the terms should not be interpreted as implying any particular order among or between various steps herein disclosed unless and except when the order of individual steps is explicitly described.

For purposes of this disclosure, the word "including" has the same broad meaning as the word "comprising," and the word "accessing" comprises "receiving," "referencing," or "retrieving." Further the word "communicating" has the same broad meaning as the word "receiving," or "transmitting" facilitated by software or hardware-based buses, receivers, or transmitters using communication media described herein. In addition, words such as "a" and "an," unless otherwise indicated to the contrary, include the plural as well as the singular. Thus, for example, the constraint of "a feature" is satisfied where one or more features are present. Also, the term "or" includes the conjunctive, the disjunctive, and both (a or b thus includes either a or b, as well as a and b).

For purposes of a detailed discussion above, embodiments of the present invention are described with reference to a distributed computing environment; however the distributed computing environment depicted herein is merely exemplary. Components can be configured for performing novel aspects of embodiments, where the term "configured for" can refer to "programmed to" perform particular tasks or implement particular abstract data types using code. Further, while embodiments of the present invention may generally refer to the technical solution environment and the schematics described herein, it is understood that the techniques described may be extended to other implementation contexts.

Embodiments of the present invention have been described in relation to particular embodiments which are intended in all respects to be illustrative rather than restrictive. Alternative embodiments will become apparent to those of ordinary skill in the art to which the present invention pertains without departing from its scope.

From the foregoing, it will be seen that this invention is one well adapted to attain all the ends and objects hereinabove set forth together with other advantages which are obvious and which are inherent to the structure.

It will be understood that certain features and sub-combinations are of utility and may be employed without reference to other features or sub-combinations. This is contemplated by and is within the scope of the claims.

## Claims

1. A computerized system comprising:
one or more computer processors; and
computer memory storing computer-useable instructions that, when used by the one or more computer processors, cause the one or more computer processors to perform operations, the operations comprising:
accessing review data associated with a first user for a first item in an item listing system;
based on the review data, identifying a review-based recommendation guide feature for the first item, wherein the review-based recommendation guide feature is associated with a review-based recommendation guide that identifies user preferences for item features of a corresponding item, wherein the review-based recommendation guides are generated using a generative artificial intelligence (AI) model and review data of users;
mapping the review-based recommendation guide feature of the first item to a review-based recommendation guide feature of a second item, wherein the review-based recommendation guide feature of the second item is associated with a review-based recommendation guide of one or more second users;
communicating the second item as a review-based recommended item associated with the review data.

2. The system of claim 1, wherein the review data is associated with a review interface of the item listing system, the review interface supports providing near real-time review-based recommended items based on review data that is received via the review interface.

3. The system of claim 1 or 2, wherein identifying the review-based recommendation guide feature for the first item is based on:
using the generative AI model and the review data, generating review-based recommendation data comprising user preferences for item features for the item; and
generating the review-based recommendation guide for the user.

4. The system of any one of claims 1 to 3, wherein mapping the review-based recommendation guide feature is based on review-based recommendation logic that indicates how items should be recommended to users based on user preference attributes and review-based recommendation guide features; and/or
wherein mapping the review-based recommendation guide feature of the first item to a review-based recommendation guide feature of a second item is performed using review-based recommendation logic that compares the review-based recommendation guide of the first item to a plurality of review-data recommendation guides to match based on the review-based recommendation guide feature.

5. The system of any one of claims 1 to 4, wherein the review-based recommendation guides are associated with a review-based recommendation guide data structure that supports storing review-based recommendation guide features, user preference attributes, and generative AI review-based insights; and/or
wherein the second item is associated with a generative AI review-based insight comprising one or more excerpts of review data corresponding to the one or more second users.

6. The system of any one of claims 1 to 5, the operations further comprising:
accessing review data from a plurality of users for corresponding item associated with an item listing system;
using a generative artificial intelligence (AI) model and the review data, generating review-based recommendation guide data comprising user preferences for item features associated with each item;
generating a plurality of review-based recommendation guides for the users and the corresponding items; and
deploying the plurality of review-based recommendation guides to support identifying review-based recommended items for users.

7. The system of any one of claims 1 to 6, the operations further comprising:
communicate review data associated with a user for a first item in an item listing system;
based on communicating the review data, access a second item and a generative AI-based insight of the second item, wherein the second item is a review-based recommended item; and
cause display of the second item and the generative AI review-based insight on a graphical user interface associated with the review data;
wherein, optionally, the generative AI review-based insight comprising one or more excerpts of review data corresponding to the one or more second users.

8. One or more computer-storage media having computer-executable instructions embodied thereon that, when executed by a computing system having a processor and memory, cause the processor to perform operations, the operations comprising:
communicating review data associated with a user for a first item in an item listing system;
based on communicating the review data, accessing a second item and a generative AI-based insight of the second item, wherein the second item is a review-based recommended item, the second item is associated with a review-based recommendation guide of the second item, wherein review-based recommendation guides are generated using a generative artificial intelligence (AI) model and review data of users; and
cause display of the second item and the generative AI review-based insight on a graphical user interface associated with the review data.

9. The media of claim 8, wherein the review data is associated with a review interface of the item listing system, the review interface supports providing near real-time review-based recommended items based on review data that is received via the review interface; and/or
wherein the generative AI review-based insight comprising one or more excerpts of review data corresponding to the one or more second users.

10. The media of claim 8 or 9, wherein the second item is identified based on:
identifying a review-based recommendation guide feature for the first item, wherein the review-based recommendation guide feature is associated with a review-based recommendation guide that identifies user preferences for item features of a corresponding item;
mapping the review-based recommendation feature of the first item to the review-based recommendation guide feature of the second item, wherein the review-based recommendation guide feature of the second item is associated with a review-based recommendation guide of one or more second users; and
communicating the second item as a review-based recommended item associated with the review data.

11. The media of any of claims 8 to 10, wherein the review-based recommendation guides are associated with a review-based recommendation guide data structure that supports storing review-based recommendation guide features, user preference attributes, and generative AI review-based insights.

12. A computer-implemented method, the method comprising:
accessing review data from a plurality of users for corresponding items associated with an item listing system;
using a generative artificial intelligence (AI) model and the review data, generating review-based recommendation guide data comprising user preferences for item features associated with each item;
using the review-based recommendation guide data, generating a plurality of review-based recommendation guides for the users and the corresponding items; and
deploying the plurality of review-based recommendation guides to support identifying review-based recommended items for users.

13. The method of claim 12, the operations further comprising:
accessing a review-based recommendation guide for a first user for a first item in the item listing system;
based on the review-based recommendation guide, identify a review-based recommendation guide feature for the first item;
mapping the review-based recommendation guide feature of the first item to a review-based recommendation guide feature of a second item, wherein the review-based recommendation guide feature of the second item is associated with a review-based recommendation guide of one or more second users; and
communicating the second item as a review-based recommended item associated with the review data.

14. The method of claim 13, wherein mapping the review-based recommendation guide feature is based on review-based recommendation logic that indicates how items should be recommended to users based on user preference attributes and review-based recommendation guide features.

15. The method of claim 13 or 14, wherein the second item is associated with a generative AI review-based insight comprising one or more excerpts of review data corresponding to the one or more second users;
wherein, optionally, the review-based recommendation guides are associated with a review-based recommendation guide data structure that supports storing review-based recommendation guide features, user preference attributes, and generative AI review-based insights.
